# EUROPÄISCHE PATENTANMELDUNG

(11) **EP 2 061 137 A1**
(43) Veröffentlichungstag der Anmeldung: **20.05.2009**
(21) Anmeldenummer: 07022402.7
(22) Anmeldetag: 19.11.2007
(51) Int. Cl.: H02K 7/14, H02K 21/24

(54) **Vorrichtung zur Maschinenanbindung eines Scheibenmotors**

(71) Anmelder: SIEMENS AKTIENGESELLSCHAFT, 80333 München (DE)
(72) Erfinder: Hoffmann, Holger, 91093 Heßdorf (DE); Schultheiss, Roland, 91052 Erlangen (DE)

(57) **Zusammenfassung**

Die Erfindung betrifft eine Vorrichtung zur Maschinenanbindung eines elektrischen Scheibenmotors (1) mit einem Primärteil (2) und einem Sekundärteil (3), wobei das Primärteil (2) an einer Antriebswelle (4) einer Maschine gelagert und stationär mit einer Maschinentragkonstruktion (12) verbunden ist.

## Beschreibung

Die Erfindung betrifft eine Vorrichtung zur Maschinenanbindung eines elektrischen Scheibenmotors mit einem Primärteil und einem Sekundärteil, wobei das Primärteil an einer Antriebswelle einer Maschine gelagert ist.

Die Konstruktionsart des Scheibenmotors als Sonderbauform einer elektrischen Maschine ist allgemein bekannt. Für den Einsatz eines Direktantriebes, welcher nach dem Prinzip des Scheibenmotors arbeitet, ist eine mechanische Konstruktion zur Anbindung des Antriebs an die entsprechende Maschine, wie beispielsweise eine Werkzeugmaschine oder eine Produktionsmaschine, erforderlich.

Bisherige Antriebskonzepte für Maschinen, beispielsweise Werkzeugmaschinen, basieren zum Beispiel auf einem Aufbau bestehend aus einem oder mehreren Elektromotoren, welche über ein zwischengeschaltetes Getriebe die geforderten Drehmomente und Drehzahlen auf eine Antriebswelle der Maschine übertragen. Je nach geforderter Leistungsstufe, d.h. gefordertem Antriebsmoment, kommen unterschiedliche Getriebe bzw. unterschiedliche elektrische Antriebe (Elektromotoren) zum Einsatz. Derartige Antriebskonzepte sind aufwändig in der Montage und verursachen durch den Einsatz von Elektromotoren und Getriebe hohe Kosten.

Es ist die Aufgabe der vorliegenden Erfindung, eine mechanische Schnittstelle bzw. eine Maschinenanbindung für einen elektrischen Scheibenmotor an eine Maschine sowie die Verwendung des elektrischen Scheibenmotors in einer Maschine bereitzustellen.

Die Aufgabe wird durch die Merkmale der Patentansprüche 1 und 22 gelöst. Vorteilhafte Weiterbildungen sind den abhängigen Patentansprüchen zu entnehmen.

Die erfindungsgemäße Vorrichtung ist vorgesehen zur Maschinenanbindung eines elektrischen Scheibenmotors an einer Antriebswelle einer Maschine. Derartige Maschinen sind beispielsweise Produktionsmaschinen (wie Druckmaschinen, Holzbearbeitungsmaschinen), Werkzeugmaschinen oder Recyclingmaschinen.

Der Scheibenmotor weist ein scheibenförmiges Primärteil und ein scheibenförmiges Sekundärteil auf, wobei das Primärteil an der Antriebswelle der Maschine gelagert ist. Erfindungsgemäß ist das Primärteil stationär mit einer Maschinentragkonstruktion der Maschine, insbesondere einer Produktionsmaschine, verbunden.

Vorzugsweise weist der Scheibenmotor ein Motorgehäuse auf, wobei das Primärteil fest mit dem Motorgehäuse verbunden ist und den Stator des Scheibenmotors, d.h. des elektrischen Direktantriebs, ausbildet. Das Motorgehäuse des Scheibenmotors ist an der Antriebswelle der Maschine gelagert und über eine lösbare Verbindung mit der Maschinentragkonstruktion verbunden. Das Sekundärteil ist drehfest mit der Antriebswelle der Maschine verbunden und bildet den Rotor des Scheibenmotors aus.

Das scheibenförmige Primärteil und das scheibenförmige Sekundärteil sind gegenüberliegend in axialer Richtung nebeneinander an der Antriebswelle angeordnet und bilden einen scheibenförmigen bzw. ringförmigen Luftspalt aus. Im Gegensatz zu herkömmlichen elektrischen Maschinen, in welchen die elektromagnetischen Felder bzw. Kräfte in radialer Richtung wirken, bilden sich die elektromagnetischen Felder und Kräfte bei einem Scheibenmotor in axialer Richtung aus.

Vorteilhafterweise weist das Primärteil mehrere gebogene oder gerade Primärteilelemente auf, wobei jedes Primärteilelement eine ein- oder mehrphasige Wicklung aufweist. Die Primärteilelemente sind in einem bestimmten Abstand und Winkel zueinander ringförmig bzw. kreisförmig an einer Grundplatte angeordnet. Jedes Primärteilelement weist vorzugsweise eine mehrphasige, insbesondere dreiphasige, Wicklung zum Anschluss an ein Drehstromnetz auf. Der Vorteil der Verwendung von geraden Primärelementen besteht darin, dass hier herkömmliche Primärteile von Standard-Linearmotoren verwendet werden können. Diese sind somit kostengünstig. Gebogene Primärteilelemente dagegen bieten den Vorteil, dass eine Ringstruktur bzw. eine Kreisstruktur besser nachgebildet werden kann. Das Primärteil ist dabei so aufbaubar, dass auf einer Grundscheibe bzw. Grundplatte eine verschiedene Anzahl von Primärteilelementen angeordnet werden kann. Dabei können entsprechend der geforderten Leistung bzw. Drehmoment mehr oder weniger Primärteilelemente angeordnet sein.

Das Sekundärteil weise ebenso mehrere gebogene oder gerade Sekundärteilelemente auf, welcher auf einer Grundscheibe angeordnet sind. Das Sekundärteil kann aber auch so ausgestaltet sein, dass die Sekundärteilelemente zusammen selbst die Scheibe bzw. einen Ring ergeben.

Da das Sekundärteil vorzugsweise als Rotor verwendet wird, weisen die Sekundärteilelemente eine vorgebbare Anzahl an Permanentmagneten auf, welche vorteilhafterweise dem Scheibenradius der Grundscheibe entsprechend ausgebildet sind. Jedes einzelne Sekundärteilelement weist beispielsweise drei Permanentmagnete auf, wobei die Permanentmagnete selbst ein- oder mehrteilig ausgeführt sein können. Auch hier können je nach gewünschter Leistungsdichte die Anzahl der Permanentmagnete je Sekundärteilelement variiert werden.

Ein Scheibenmotor bietet den Vorteil, dass das Drehmoment bzw. die Leistungsdichte einfach variabel einstellbar ist. Zum einen kann der Luftspalt zwischen Sekundärteil und Primärteil, welcher senkrecht zur Antriebswelle verläuft, verschieden breit ausgebildet sein. Ist der Luftspalt sehr eng bzw. klein ausgebildet, ist eine höhere Leistung bzw. ein höheres Drehmoment übertragbar. Je größer der Luftspalt ausgebildet ist, je geringer wird die Übertragung des Drehmoments auf die Antriebswelle sein. Weiterhin ist das Drehmoment dadurch variabel einstellbar, dass mehr oder weniger Primärteilelemente am Primärteil angeordnet sind.

In einer weiteren Ausgestaltung der Erfindung können an der Antriebswelle auch mehrere Sekundärteile und/oder Primärteile angeordnet sein.

Das Sekundärteil ist je nach gewünschter Ausführungsform kraft-, form- oder stoffschlüssig drehfest mit der Antriebswelle verbunden. Vorteilhafterweise ist das Sekundärteil, insbesondere die Grundplatte des Sekundärteils, über ein oder mehrere Ringspannelemente, Hydraulik-Spannelemente, Sternscheiben, Vielkeilverzahnungen, Polygonverbindungen oder Passfedern drehfest mit der Antriebswelle verbunden. In einer weiteren Ausgestaltung kann das Sekundärteil, insbesondere Grundplatte des Sekundärteils, auf die Antriebswelle aufgeschrumpft sein.

Vorzugsweise weist das Sekundärteil eine Trägerplatte auf, welche mehrere radial angeordnete Rippen aufweist. Derartige Rippen dienen dazu, die auf die Trägerplatte axial wirkenden Kräfte, welche aus den Anziehungskräften der Primärteilelemente und der Sekundärteilelemente resultieren, abzufangen.

Das Motorgehäuse des Scheibenmotors ist aus nicht rostendem Material hergestellt bzw. weist nicht rostende Materialien auf und besteht im Wesentlichen aus drei Elementen, zwei kreisrunden Scheiben und einem Hohlzylinder. Jeweils an einer Stirnseite des Hohlzylinders ist dabei eine Scheibe mit dem Hohlzylinder verschraubt, so dass die beiden Öffnungen des Hohlzylinders verschlossen sind. Um das Gehäuseinnere vor Umwelteinflüssen, wie Schmutz oder Staub, zu schützen, ist zwischen den Scheiben und dem Hohlzylinder entsprechendes Dichtmaterial eingebracht.

Jede der beiden Scheiben weist jeweils eine mittige Bohrung bzw. Aussparung auf, in welche ein Lager eingepresst ist, um das Motorgehäuse stationär auf der Antriebswelle zu lagern. Dabei ist ein Lager einer Scheibe als Festlager ausgebildet und das zweite Lager der zweiten Scheibe zwecks Wärmedehnung des Motorsgehäuses als Loslager ausgebildet. Die Lager, beispielsweise Rillenkugellager werden durch Dichtringe verschlossen.

Maschinenseitig sind am Motorgehäuse ein oder mehrere Drehmomentstützen angeordnet. Die Drehmomentstützen sind in Form einseitig offener Hohlquader ausgeführt und liegen jeweils auf einem aus der Maschinentragkonstruktion ragenden zylindrischen Bolzen auf. Die als Hohlquader ausgebildete Drehmomentstütze des Motorgehäuses wird dabei über den zylindrischen Bolzen an der Maschinentragkonstruktion geschoben.

Vorteilhafterweise weist das Motorgehäuse des Scheibenmotors einen Lufteinlass und einen Luftauslass zur Belüftung, insbesondere zur Überdruckbelüftung, des Scheibenmotors auf. Lufteinlass und Luftauslass dienen zur inneren Belüftung des Scheibenmotors, u.a. zur Einhaltung von Ex-Schutz-Anforderungen. Durch die Belüftung wird im Inneren des Motorgehäuses ein Überdruck gegenüber der Umgebung erzeugt. Dazu ist ein Ventilator bzw. ein Lüfter erforderlich, welcher beispielsweise direkt am Motorgehäuse im Bereich des Lufteinlasses angeordnet ist.

Zur Entlastung der Lager des Motorgehäuses sowie der Antriebswelle ist vorteilhafterweise an der Maschinentragkonstruktion ein Traggestell angeordnet. Das Gewicht des Scheibenmotors sowie das Gewicht des Motorgehäuses müssen dann nicht vollständig von der Antriebswelle der Maschinen getragen werden, sondern werden zum Teil über das Traggestell auf die Maschinentragkonstruktion verlagert. Hierfür sind am Motorgehäuse zusätzlich Finger angeordnet, welche in dafür vorgesehene Führungsschienen des Traggestells greifen. Die Führungsschienen im Traggestell erlauben weiterhin eine Bewegung des Motors gegenüber der stationären Maschinentragkonstruktion.

Die Vorrichtung zur Maschinenanbindung eines elektrischen Scheibenmotors ist zur Verwendung bei Produktionsmaschinen, wie beispielsweise Druckmaschinen, Holzbearbeitungsmaschinen oder Folienreckanlagen, Werkzeugmaschinen und Recyclingmaschinen vorgesehen. Die genannten Maschinentypen stellen jedoch nur eine Auswahl dar.

In der nachfolgenden Beschreibung werden weitere Merkmale und Einzelheiten der Erfindung im Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- FIG 1: eine Ausgestaltung eines scheibenförmigen Primärteils,
- FIG 2: eine Ausgestaltung eines scheibenförmigen Sekundärteils,
- FIG 3: eine erste Ausgestaltung eines Scheibenmotors,
- FIG 4: eine zweite Ausgestaltung eines Scheibenmotors,
- FIG 5: eine erste Ausgestaltung einer Vorrichtung zur Maschinenanbindung eines Scheibenmotors,
- FIG 6: eine zweite Ausgestaltung einer Vorrichtung zur Maschinenanbindung eines Scheibenmotors,
- FIG 7: eine dritte Ausgestaltung einer Vorrichtung zur Maschinenanbindung eines Scheibenmotors,
- FIG 8: eine vierte Ausgestaltung einer Vorrichtung zur Maschinenanbindung eines Scheibenmotors, und
- FIG 9: eine Ausgestaltung für ein Traggestell für eine Vorrichtung zur Maschinenanbindung gemäß FIG 8.

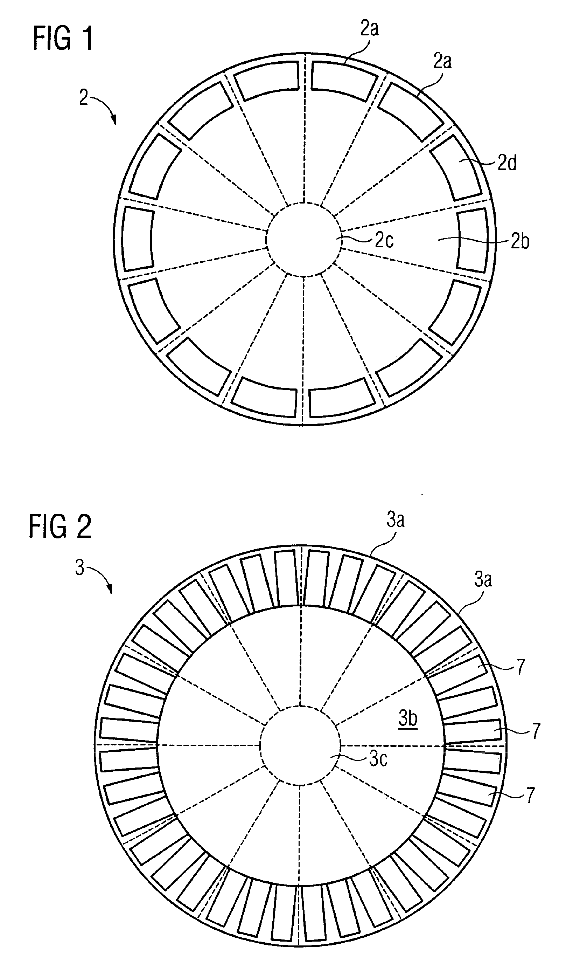

FIG 1 zeigt ein scheibenförmiges Primärteil 2, welches eine Trägerplatte 2b aufweist. An der Trägerplatte 2b sind mehrere gebogene Primärteilelemente 2a angeordnet. In dem Ausführungsbeispiel gemäß FIG 1 sind beispielsweise vierzehn Primärteilelemente 2b angeordnet. Jedes Primärteilelement 2b weist eine separate ein- oder mehrphasige, vorzugsweise dreiphasige, Wicklung 2d auf (schematisch dargestellt), welche insbesondere mittels Zahnspulen, auch Polspulen genannt, gebildet ist. Nach FIG 1 ist die dem Scheibenradius zugehörige maximale Anzahl von Primärteilelementen 2a auf der Trägerplatte 2b angeordnet. Es können jedoch auch weniger Primärteilelemente 2a angeordnet sein, wie beispielsweise die Hälfte. Je nach gewünschter Leistung kann eine bestimmte Anzahl von Primärteilelementen 2a angeordnet werden. Anstatt der gebogenen Primärteilelemente 2a können aber auch gerade Primärteilelemente angeordnet sein, wie sie von herkömmlichen Linearmotoren bekannt sind. In der Mitte des Primärteils 2 ist die Aussparung 2c zu sehen, mittels welcher das Primärteil 2 an einer nicht gezeigten Antriebswelle anordenbar ist.

FIG 2 zeigt eine Ausführungsform für ein Sekundärteil 3. Das Sekundärteil 3 weist mehrere Sekundärteilelemente 3a auf. Die Sekundärteilelemente 3a bilden aneinandergefügt einen Ring bzw. einen Kreis. Die Sekundärteilelemente 3a können einerseits ebenfalls auf einer Trägerplatte 3b angeordnet sein oder ein durch die Sekundärteilelemente 3a gebildeter Ring wird mittels Streben oder Stangen an einem (nicht gezeigten) Lager an der Aussparung 3c angeordnet.

Jedes Sekundärteilelement 3a weist drei Permanentmagnete 7 auf, wobei jeder Permanentmagnet 7 ein- oder mehrteilig aufgebaut sein kann. Jeder Permanentmagnet 7 ist quaderförmig ausgebildet und die Permanentmagnete 7 sind in einem bestimmten Winkel zueinander angeordnet, insbesondere derart, dass eine kreisförmige Anordnung nachgebildet ist.

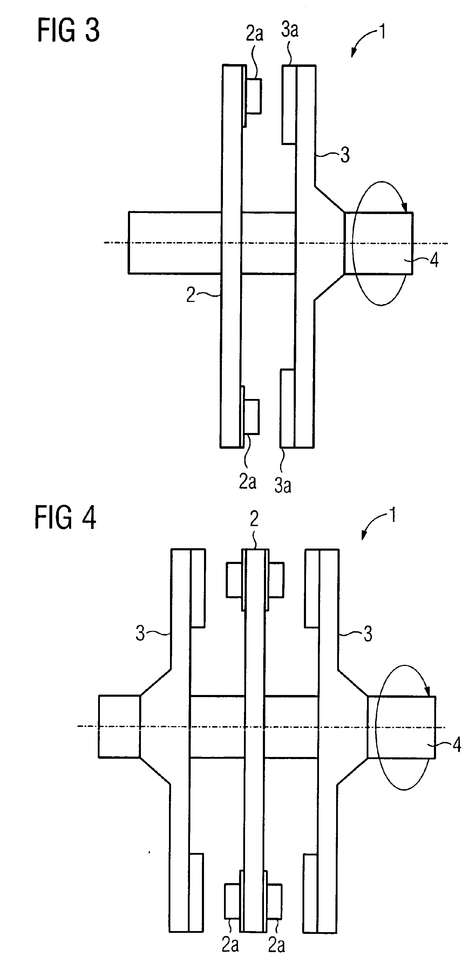

FIG 3 zeigt eine erste Ausgestaltung eines elektrischen Scheibenmotors 1. Der Scheibenmotor 1 stellt gemäß FIG 3 eine sogenannte Einzelkammausführung dar. Der Scheibenmotor 1 weist das Primärteil 2 und das Sekundärteil 3 auf, welche durch einen scheibenförmigen bzw. ringförmigen Luftspalt voneinander beabstandet sind. Die elektromagnetischen Kräfte bzw. Felder wirken in axialer Richtung parallel zur Antriebswelle 4 zwischen Primärteil 2 und Sekundärteil 3. Am Sekundärteil 3 sind Sekundärteilelemente 3a mit Permanentmagneten angeordnet. Am Primärteil 2 sind mehrere Primärteilelemente 2a mit jeweils einer separaten Wicklung angeordnet. Gemäß FIG 3 ist das Sekundärteil 3 als bewegtes Bauteil und das Primärteil 2 als stationäres Bauteil ausgeführt. Es könnte aber auch das Primärteil 2 bewegt und das Sekundärteil 3 stationär ausgebildet sein.

FIG 4 zeigt eine zweite Ausgestaltung eines Scheibenmotors 1, eine sogenannte Doppelkammausführung. Zwischen zwei Sekundärteilen 3 ist ein Primärteil 2 angeordnet. Das Primärteil 2 ist an der Antriebswelle 4 angeordnet, wobei das Primärteil 2 als Rotor und die Sekundärteile 3 als Statoren bzw. stationäre Bauteile ausgeführt sind. An dem scheibenförmigen Primärteil 2 sind nun auf jeder Seite mehrere Primärteilelemente 2a angeordnet. Es könnte aber auch zwischen zwei Primärteilen 2 ein Sekundärteil 3 angeordnet sein.

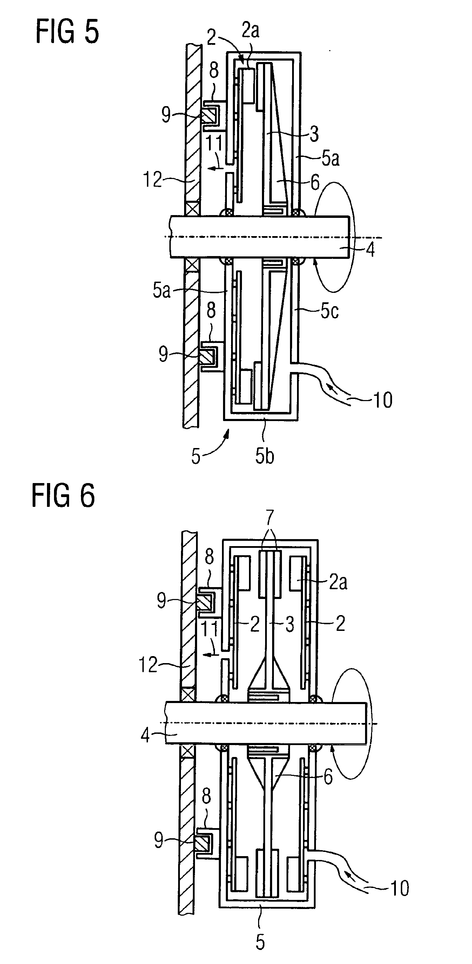

FIG 5 zeigt eine erste Ausgestaltung einer Vorrichtung zur Maschinenanbindung eines elektrischen Scheibenmotors 1, welcher als Einzelkamm-Scheibenmotor ausgeführt ist. Das scheibenförmige Primärteil 2 mit mehreren Primärteilelementen 2a und das scheibenförmige Sekundärteil 3 sind an der Antriebswelle 4 angeordnet. Mittels der Antriebswelle 4 wird das erzeugte Drehmoment des Direktantriebs, d.h. des Scheibenmotors 1, zu einer nicht gezeigten Maschine übertragen. Primärteil 2 und Sekundärteil 3 sind in einem Motorgehäuse 5 angeordnet. Das Primärteil 2 ist dabei am Motorgehäuse 5 angeordnet, wobei zum Zweck einer Scheibenhinterlüftung ein Abstand des Primärteils 2 zum Motorgehäuse 5 vorgesehen ist. Das Motorgehäuse 5 weist zwei kreisrunde Scheiben 5a auf, sowie einen Hohlzylinder 5b, wobei jeweils an einer Stirnseite des Hohlzylinders 5b eine Scheibe 5a mit dem Hohlzylinder 5b verschraubt ist. Weiterhin weist das Motorgehäuse 5 einen Lufteinlass 10 und einen Luftauslass 11 zur Belüftung des Scheibenmotors auf. Das Motorgehäuse 5 ist mittels zweier Lager, insbesondere eines Festlagers und eines Loslagers an der Antriebswelle 4 gelagert.

Weiterhin weist das Sekundärteil 3 zur Abstützung Rippen 6 auf, um die axial wirkenden Kräfte zwischen Primärteil 2 und Sekundärteil 3 aufzufangen.

Das Primärteil 2 ist fest mit dem Motorgehäuse 5 verbunden, wobei das Motorgehäuse 5 an der Antriebswelle 4 gelagert ist und über eine lösbare Verbindung mit der Maschinentragkonstruktion 12 verbunden ist. Maschinenseitig ist am Motorgehäuse 5 eine Drehmomentstütze 8 angeordnet, welche in Form eines einseitig offenen Hohlquaders ausgeführt ist. An der Maschinentragkonstruktion 12 sind mehrere zylindrische Bolzen 9 angeordnet, wobei die Drehmomentstütze 8 an den Bolzen 9 aufliegt.

FIG 6 zeigt eine zweite Ausgestaltung einer Vorrichtung zur Maschinenanbindung eines elektrischen Scheibenmotors 1. Der Scheibenmotor 1 ist gemäß FIG 6 als Doppelkamm-Scheibenmotor ausgeführt.

Die Ausgestaltung gemäß FIG 6 entspricht im Wesentlichen der Ausgestaltung gemäß FIG 5. Jedoch sind nun im Inneren des Motorgehäuses 5 zwei Primärteile 2 angeordnet, wobei zwischen den zwei Primärteilen 2 ein Sekundärteil 3 angeordnet ist. Auf beiden Seiten des Sekundärteils 3 sind nun mehrere Permanentmagnete 7 angeordnet.

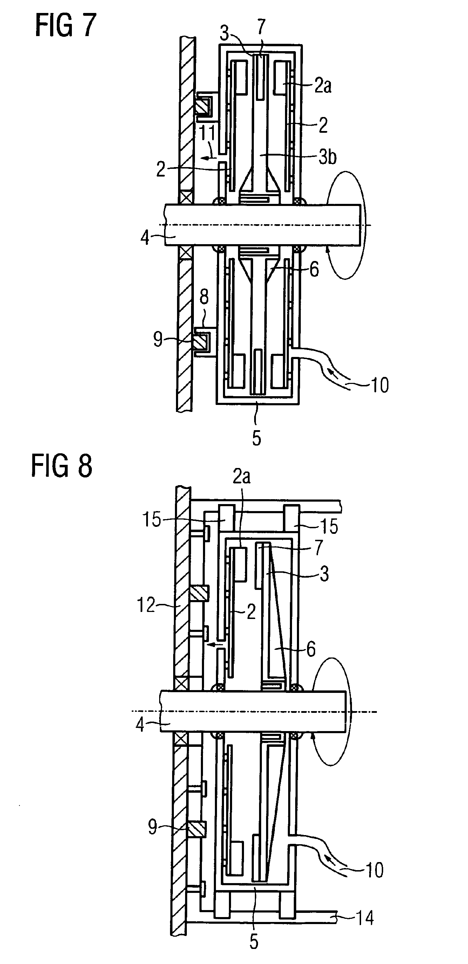

FIG 7 zeigt eine dritte Ausgestaltung für eine Vorrichtung zur Maschinenanbindung, wobei die Ausgestaltung gemäß FIG 7 im Wesentlichen der Ausgestaltung gemäß FIG 6 entspricht. Auch hier ist ein Scheibenmotor 1 in einer Doppelkammausführung mit zwei Primärteilen 2 und einem Sekundärteil 3 gezeigt. Jedoch sind die Permanentmagnete 7 des Sekundärteils 3 nicht auf beiden Seiten der Scheibe bzw. Trägerplatte 3b angeordnet, sondern in die Trägerplatte 3b integriert. Weiterhin ist zu sehen, dass das Sekundärteil 3 zur Stabilisierung beidseitig mittels der Rippen 6 abgestützt ist.

FIG 8 zeigt eine vierte Ausführungsform für eine Vorrichtung zur Maschinenanbindung des elektrischen Scheibenmotors 1. Zur Entlastung der Motorlagerung sowie der Antriebswelle 4 ist ein Traggestell 14 an der Maschinentragkonstruktion 12 angebracht. Das Gewicht des Scheibenmotors 1 inklusive Motorgehäuse 5 muss somit nicht vollständig von der Antriebswelle 4 getragen werden, sondern wird teilweise von dem Traggestell 14 aufgenommen. Hierfür sind am Motorgehäuse 5 mehrere Finger 15 angeordnet, welche in dafür vorgesehene Führungsschienen 16 im Traggestell 14 greifen. Der Scheibenmotor 1 wird zusammen mit dem Motorgehäuse 5 und den Fingern 15 in das Traggestell 14 axial eingeschoben. Die Führungsschienen 16 im Traggestell 14 erlauben eine Bewegung des Scheibenmotors 1 gegenüber der stationären Maschinentragkonstruktion 12.

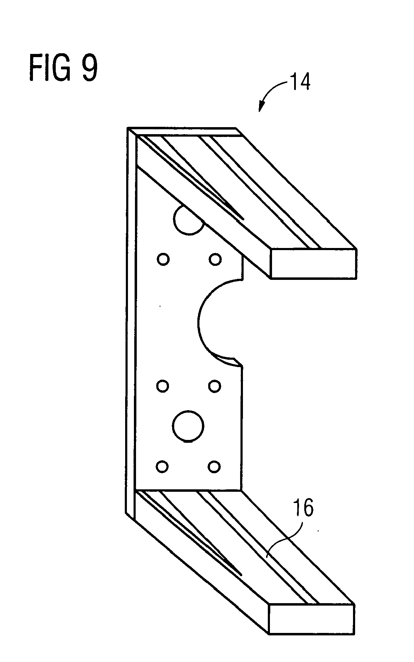

FIG 9 zeigt eine Ausgestaltung für ein Traggestell 14, welches die Führungsschienen 16 aufweist. Das Traggestell 14 ist an der Maschinentragkonstruktion 12 angeordnet und dient zur Aufnahme des Motorgehäuses 5, in welchem der Scheibenmotor 1 angeordnet ist.

Mittels der beschriebenen Maschinentragkonstruktion ist eine Anbindung eines Scheibenmotors an eine Maschine mit nur geringfügigen Veränderungen der mechanischen Gegebenheiten der Maschine möglich. Die Motorgehäusekonstruktion verfügt sowohl über eine flexible Schnittstelle zur Maschinentragkonstruktion zwecks Drehmomentabstützung, als auch über eine Schnittstelle zum anzutreibenden Element der Maschine, wie beispielsweise die Antriebswelle. Geometrische Abmessungen des Motors und vorherrschende räumliche Einbaubedingungen können beim Aufbau eines Scheibenmotors einfach aufeinander abgestimmt werden. Je nach vorherrschenden Peripheriegegebenheiten und sich daraus ergebenden Sicherheitsauflagen, wie beispielsweise Ex-Schutzanforderungen, können die Sicherheitsgegebenheiten des Motorsystems flexibel angepasst werden.

Durch die erfindungsgemäße Vorrichtung zur Maschinenanbindung eines elektrischen Scheibenmotors werden parasitäre Kräfte, welche beim Betrieb des Scheibenmotors auftreten, beispielsweise Anziehungskräfte zwischen Primärteil und Sekundärteil, aufgenommen bzw. an die Maschinentragkonstruktion der Maschine weiter geleitet.

Die erfindungsgemäße Vorrichtung ermöglicht einen modularen Aufbau des gesamten Antriebssystems. Durch mechanische Elemente an der Motorgehäusekonstruktion ist eine mechanische Kopplung mehrerer Scheibenmotorenmodule, d.h. Primärteile und Sekundärteile, zwecks Drehmomenterhöhung einfach möglich. Die Scheibenmotormodule können hierbei sowohl in Einzel- als auch in Doppelkammausführung realisiert sein.

## Patentansprüche

1. Vorrichtung zur Maschinenanbindung eines elektrischen Scheibenmotors (1) mit einem Primärteil (2) und einem Sekundärteil (3), wobei das Primärteil (2) an einer Antriebswelle (4) einer Maschine gelagert ist,
**dadurch gekennzeichnet, dass** das Primärteil (2) stationär mit einer Maschinentragkonstruktion (12) der Maschine verbunden ist.

2. Vorrichtung zur Maschinenanbindung eines elektrischen Scheibenmotors (1) nach Anspruch 1,
**dadurch gekennzeichnet, dass** der Scheibenmotor (1) ein Motorgehäuse (5) aufweist und das Primärteil (2) fest mit dem Motorgehäuse (5) verbunden ist, wobei das Motorgehäuse (5) an der Antriebswelle (4) gelagert ist und über eine lösbare Verbindung mit der Maschinentragkonstruktion (12) verbunden ist.

3. Vorrichtung zur Maschinenanbindung eines elektrischen Scheibenmotors (1) nach Anspruch 1 oder 2,
**dadurch gekennzeichnet, dass** das Primärteil (2) mehrere gebogene oder gerade Primärteilelemente (2a), welche an einer Trägerplatte (2b) angeordnet sind, aufweist und jedes Primärteilelement (2a) eine ein- oder mehrphasige Wicklung aufweist.

4. Vorrichtung zur Maschinenanbindung eines elektrischen Scheibenmotors (1) nach Anspruch 1, 2 oder 3, **dadurch gekennzeichnet, dass** das Sekundärteil (3) drehfest mit der Antriebswelle (4) verbunden ist.

5. Vorrichtung zur Maschinenanbindung eines elektrischen Scheibenmotors (1) nach Anspruch 4,
**dadurch gekennzeichnet, dass** das Sekundärteil (3) über ein oder mehrere Ringspannelemente, Hydraulik-Spannelemente, Sternscheiben, Vielkeilverzahnungen, Polygonverbindungen oder Passfedern drehfest mit der Antriebswelle(4) verbunden ist.

6. Vorrichtung zur Maschinenanbindung eines elektrischen Scheibenmotors (1) nach Anspruch 4, **dadurch gekennzeichnet, dass** das Sekundärteil (3) auf die Antriebswelle (4) aufgeschrumpft ist.

7. Vorrichtung zur Maschinenanbindung eines elektrischen Scheibenmotors (1) nach einem der vorhergehenden Ansprüche, **dadurch gekennzeichnet, dass** das Sekundärteil (3) eine Trägerplatte (3b) aufweist, welche mehrere radial angeordnete Rippen (6) aufweist.

8. Vorrichtung zur Maschinenanbindung eines elektrischen Scheibenmotors (1) nach einem der vorhergehenden Ansprüche, **dadurch gekennzeichnet, dass** das Sekundärteil (3) mehrere gebogene oder gerade Sekundärteilelemente (3a) aufweist.

9. Vorrichtung zur Maschinenanbindung eines elektrischen Scheibenmotors (1) nach Anspruch 8, **dadurch gekennzeichnet, dass** die Sekundärteilelemente (3a) eine vorgebbare Anzahl quaderförmiger Permanentmagnete (7) aufweisen.

10. Vorrichtung zur Maschinenanbindung eines elektrischen Scheibenmotors (1) nach einem der vorhergehenden Ansprüche, **dadurch gekennzeichnet, dass** das Motorgehäuse (5) rostfreie Materialien aufweist.

11. Vorrichtung zur Maschinenanbindung eines elektrischen Scheibenmotors (1) nach einem der vorhergehenden Ansprüche, **dadurch gekennzeichnet, dass** das Motorgehäuse (5) zwei kreisrunde Scheiben (5a) und einen Hohlzylinder (5b) aufweist, wobei jeweils an einer Stirnseite des Hohlzylinders (5b) eine Scheibe (5a) mit dem Hohlzylinder (5b) verschraubt ist.

12. Vorrichtung zur Maschinenanbindung eines elektrischen Scheibenmotors (1) nach Anspruch 11, **dadurch gekennzeichnet, dass** zwischen Scheiben (5a) und Hohlzylinder (5b) Dichtmaterial angeordnet ist.

13. Vorrichtung zur Maschinenanbindung eines elektrischen Scheibenmotors (1) nach Anspruch 11 oder 12, **dadurch gekennzeichnet, dass** jeweils eine Scheibe (5a) eine mittige Bohrung (5c) aufweist, in welche ein Lager eingepresst ist, um das Motorgehäuse (5) stationär auf der Antriebswelle (4) zu lagern.

14. Vorrichtung zur Maschinenanbindung eines elektrischen Scheibenmotors (1) nach Anspruch 13, **dadurch gekennzeichnet, dass** eine Scheibe (5a) ein Festlager und eine Scheibe (5a) ein Loslager aufweist, wobei das Loslager insbesondere ein Rillenkugellager ist.

15. Vorrichtung zur Maschinenanbindung eines elektrischen Scheibenmotors (1) nach einem der vorhergehenden Ansprüche, **dadurch gekennzeichnet, dass** am Motorgehäuse (5) eine Drehmomentstütze (8) angeordnet ist.

16. Vorrichtung zur Maschinenanbindung eines elektrischen Scheibenmotors (1) nach Anspruch 16, **dadurch gekennzeichnet, dass** die Drehmomentstütze (8) in Form eines einseitig offenen Hohl-Quaders ausgebildet ist und an einem aus der Maschinentragkonstruktion (12) ragenden zylindrischen Bolzen (9) aufliegt.

17. Vorrichtung zur Maschinenanbindung eines elektrischen Scheibenmotors (1) nach einem der vorhergehenden Ansprüche, **dadurch gekennzeichnet, dass** das Motorgehäuse (5) einen Lufteinlass (10) und einen Luftauslass (11) zur Belüftung des Scheibenmotors (1) aufweist.

18. Vorrichtung zur Maschinenanbindung eines elektrischen Scheibenmotors (1) nach Anspruch 17, **dadurch gekennzeichnet, dass** im Bereich des Lufteinlasses (10) ein Ventilator (12) angeordnet ist.

19. Vorrichtung zur Maschinenanbindung eines elektrischen Scheibenmotors (1) nach einem der vorhergehenden Ansprüche, **dadurch gekennzeichnet, dass** an der Maschinentragkonstruktion (12) ein Traggestell (14) angeordnet ist.

20. Vorrichtung zur Maschinenanbindung eines elektrischen Scheibenmotors (1) nach Anspruch 19, **dadurch gekennzeichnet, dass** am Motorgehäuse (5) Finger (15) angeordnet sind, welche in dafür vorgesehene Führungsschienen (16) im Traggestell (14) greifen.

21. Vorrichtung zur Maschinenanbindung eines elektrischen Scheibenmotors (1) nach einem der vorhergehenden Ansprüche, **dadurch gekennzeichnet, dass** an der Antriebswelle (4) mehrere Primärteile (2) und/oder Sekundärteile (3) angeordnet sind.

22. Verwendung einer Vorrichtung zur Maschinenanbindung eines elektrischen Scheibenmotors (1) an eine Maschine, wobei die Maschine als Produktionsmaschine, Werkzeugmaschine, Recyclingmaschine ausgebildet ist und die Vorrichtung nach einem oder mehreren der Ansprüche 1 bis 21 ausgebildet ist.
